# EUROPEAN PATENT SPECIFICATION

(11) **EP 1 571 165 B1**
(45) Date of publication and mention of the grant of the patent: **07.01.2009**
(21) Application number: 04075626.4
(22) Date of filing: 01.03.2004
(51) Int. Cl.: C08F 220/22, C08F 220/18, C08L 33/10, C08L 33/08, C09D 133/08, C09D 133/10, C09D 133/16

(54) **Compositions for the preparation of hydrophobic coatings**
Zusammensetzungen zur Herstellung von hydrophoben Beschichtungen
Compositions pour la prépapation de revêtements hydrophobes

(43) Date of publication of application: 07.09.2005
(73) Proprietor: Toffano, Lorenzo, 20135 Milano (IT)
(72) Inventor: Toffano, Lorenzo, 20135 Milano (IT)
(74) Representative: Serravalle, Marco

(56) References cited:
- EP-A- 0 337 474
- EP-A- 1 172 383
- WO-A-02/085961
- FR-A- 2 592 055
- GB-A- 1 374 670
- US-A- 3 808 179
- US-A- 4 100 340
- US-A- 4 900 569
- US-A- 5 387 640
- US-A- 5 914 384
- US-A- 5 948 851
- US-B1- 6 479 605

## Description

The present invention concerns the prevention of limestone deposits on surfaces frequently in contact with hard water, e.g.sanitary articles. It is a well known problem that surfaces subjected to frequent wetting and subsequent evaporation of water, have often an unesthetic apparence and are difficult to clean. Even the use of hydrophobic coatings does not eliminate the problem. These coatings, in fact, reduce the amount of water that remains on the sanitary article but, in general, the limestone which remains after evaporation of water is highly adhesive and it is difficult to remove from the article. Furthermore, the coatings used in the art are often removed during time and their effect is therefore only temporary.

WO 02/85961 discloses antiliming articles comprising a copolymer obtained by polymerising a methyl methacrylate with 1 to 30 % of a polyfluorinated monomer. The use of the fluorinated monomer in bulk makes the article very expensive.

A very good compromise between hydrophobicity of the surface, increase in contact angle and adhesiveness of the substrate to the surface is obtained by the present invention. This result is achieved by applying to a surface a composition comprising a polymer obtained by polymerizing a mixture of an alkyl (meth)acrylate and a fluorinated alkyl (meth)acrylate and wherein fluorine content of the polymer is comprised between 15 and 60 % by weight, preferably between 25 and 60% by weight, more preferably between 30 and 58% by weight, most preferably between 35 and 55% by weight. The amount of fluorine required to reach the desired effects depends not only on the (meth)acrylate used, but also on the other monomers present in the composition and on the possible use of cross-linking agents.
The coating obtained by applying the polymer to a surface is hydrophobic, persistent and does not permit adhesion of limestone to the surface, allowing an easy cleaning of the same.

The polymer is prepared by polymerizing an alkyl (meth)acrylate monomer, a fluorinated alkyl (meth)acrylate monomer and optionally a hydroxyalkyl (meth)acrylate monomer in the presence of a free radical initiator.

In another embodiment of the invention the coating is obtained by cross-linking the polymer by using conventional cross-linking agents. If the polymer contains epoxy groups, useful cross-linking agents are polyamines, for example *N,N,N',N'*-tetrakis(3-aminopropyl)-1,4-butanediamine, pentaethylenehexamine, tetraethylenepentamine, triethylenetetramine, diethylenetriamine, or polyamides.

If the polymer contains hydoxyl groups, cross-linking agents are polyisocyanates such as toluene 2,4-diisocyanate, poly(tetrafluoroethylene oxide-co-difluoromethylene oxide)α,ω-diisocyanate, trans-1,4-cyclohexylene diisocyanate, 2,6-tolylene diisocyanate, octamethylene diisocyanate, hexamethylene diisocyanate, 1,3-bis(isocyanatomethyl)benzene, 1,4-diisocyanatobutane, isophorone diisocyanate, 1,3-phenylene diisocyanate, 1,4-phenylene diisocyanate, poly(1,4-butanediol) isophorone diisocyanate terminated, poly(1,4-butanediol) tolylene 2,4-diisocyanate terminated, poly(ethylene adipate) tolylene 2,4-diisocyanate terminated, poly(propylene glycol) tolylene 2,4-diisocyanate terminated, trimethylolpropane carbamate with xylylene diisocyanate, 2,4,6-trimethyl-1,3-phenylene diisocyanate, 4,4'-methylenebis(phenyl isocyanate), triphenylmethane triisocyanate, 1,3,5-benzene triisocyanate, 2,4,5-toluene triisocyanate and Desmodur N-3390 ™(Bayer).

Preferred crosslinking agents are poly(1,4-butanediol) isophorone diisocyanate terminated and 4,4'-methylenebis(phenyl isocyanate).

If the polymer contains carbonyl groups, suitable cross-linking agents are carbodihydrazides of general formula H₂N-NH-CO-R-CO-NH-NH₂, wherein R is a divalent aliphatic or aromatic radical containing from 2 to 50 carbon atoms.
The cross-linked coating is preferably obtained by mixing the solution comprising the polymer with a solution (preferably in the identical solvent) of the cross-linking agent. The combined system is used immediately after in order to have the cross-linking reaction on the coating rather than in bulk.

Examples of fluorinated alkyl (meth)acrylate monomers useful in the present invention are ethylperfluoroalkyl/meth)acrylate monomers. Examples of preferred fluorinated monomers are:

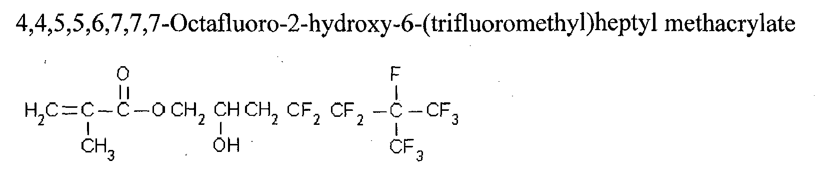

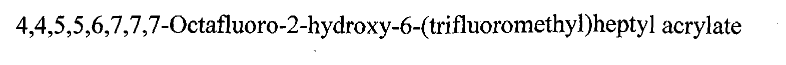

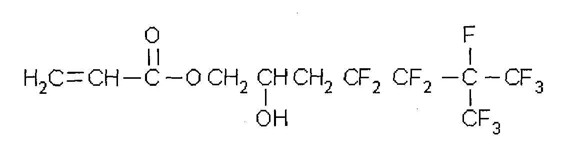

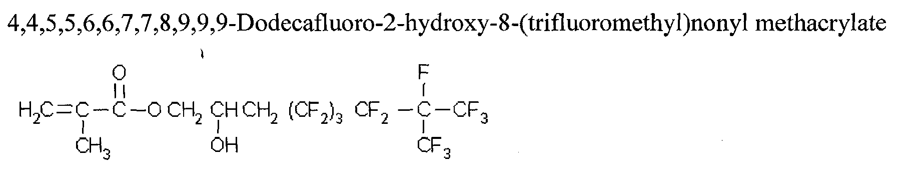

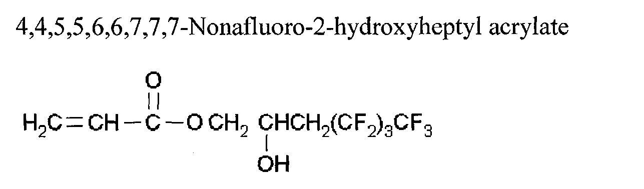

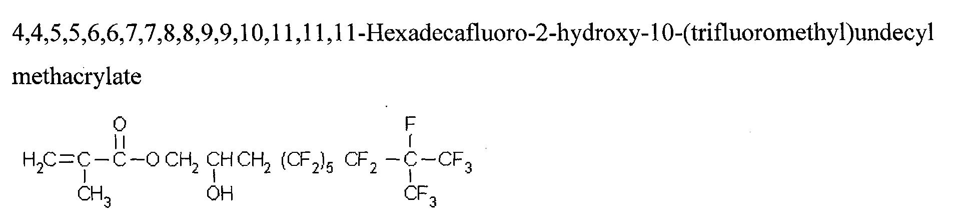

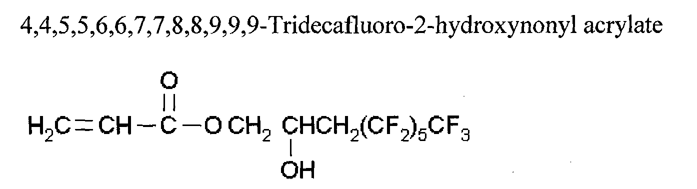

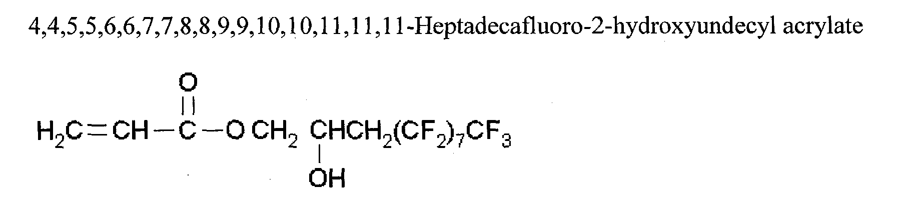

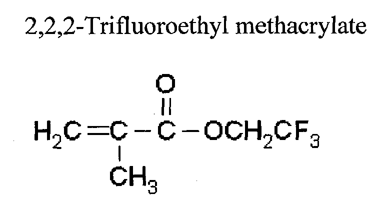

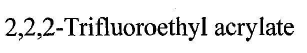

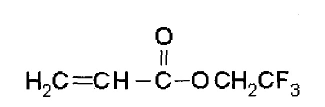

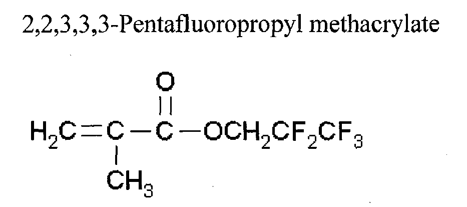

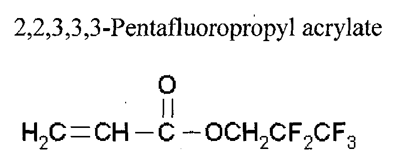

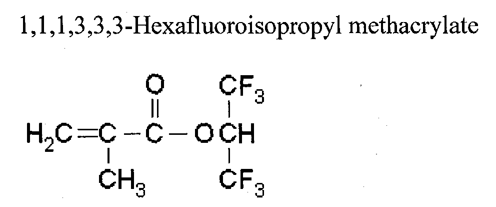

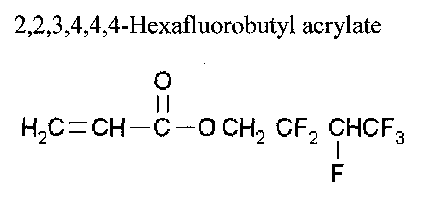

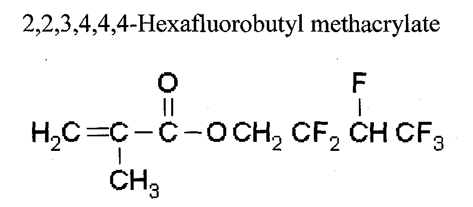

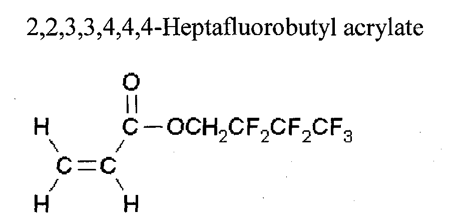

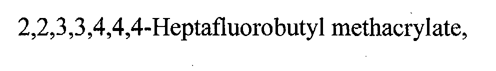

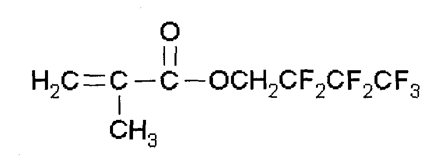

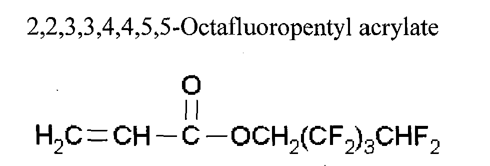

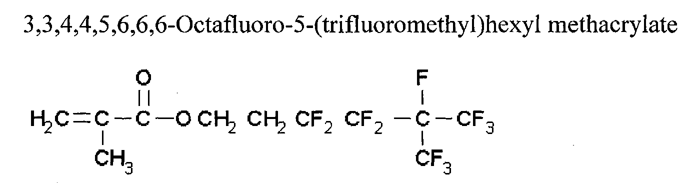

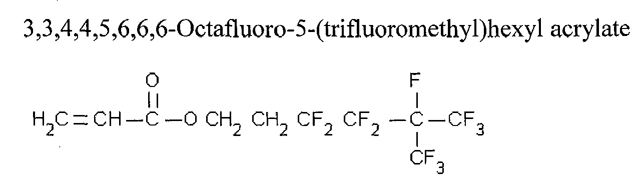

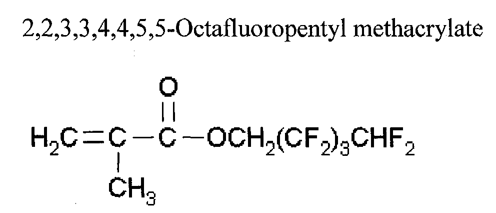

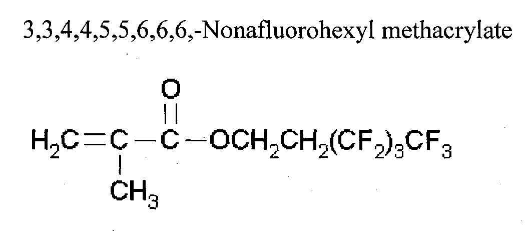

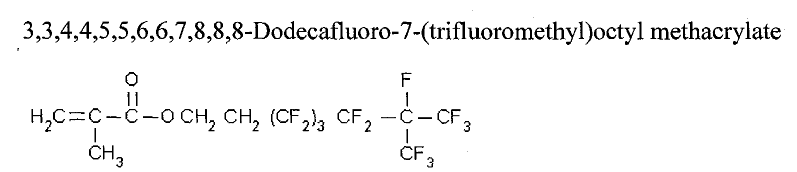

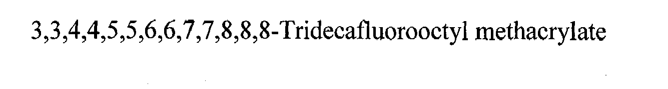

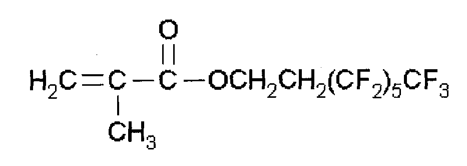

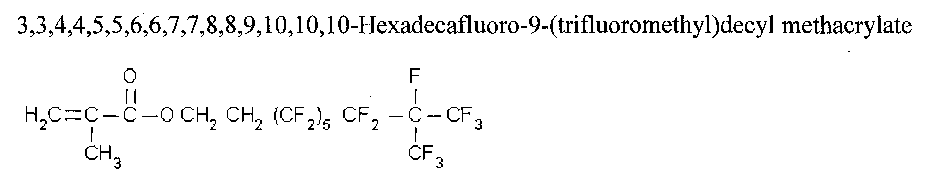

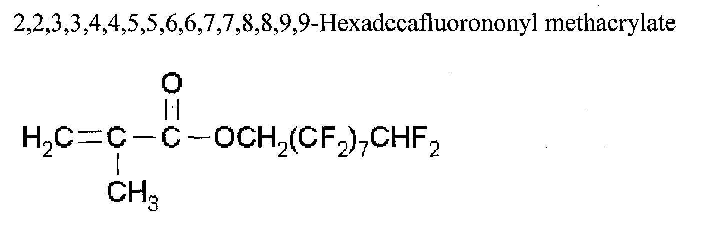

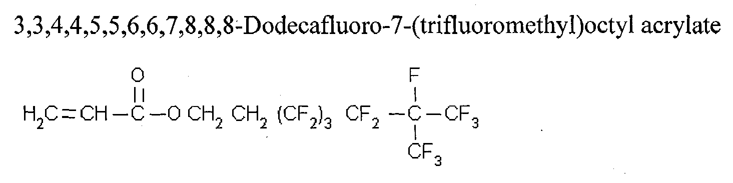

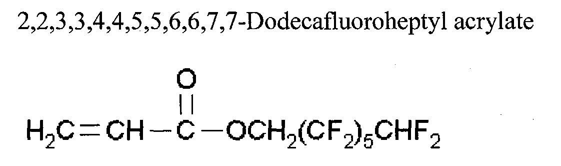

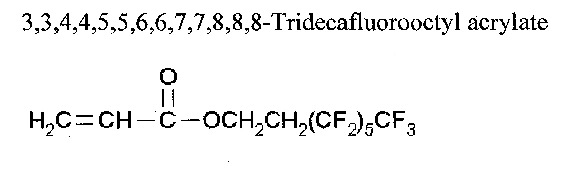

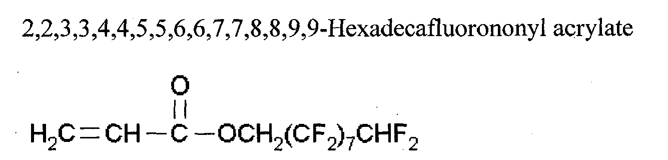

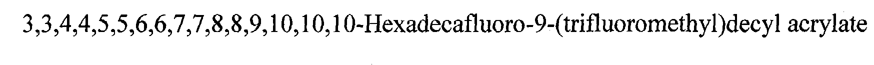

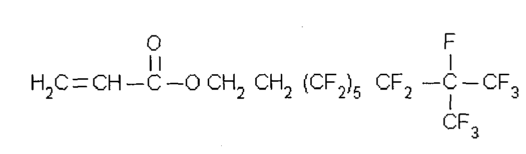

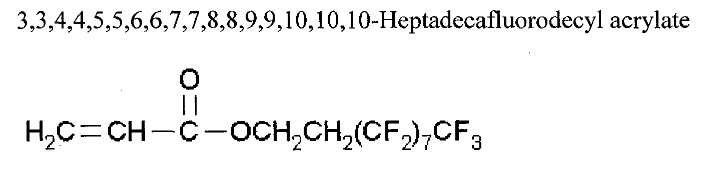

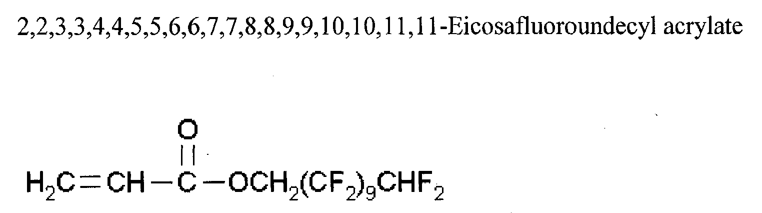

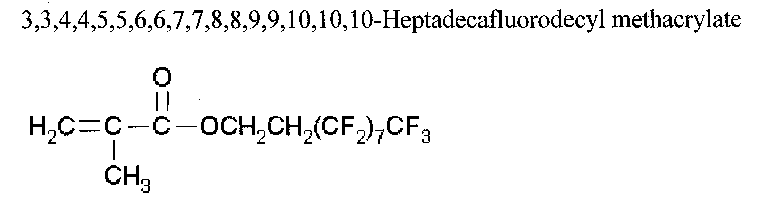

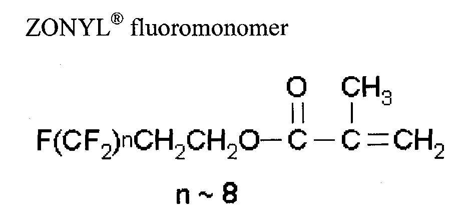

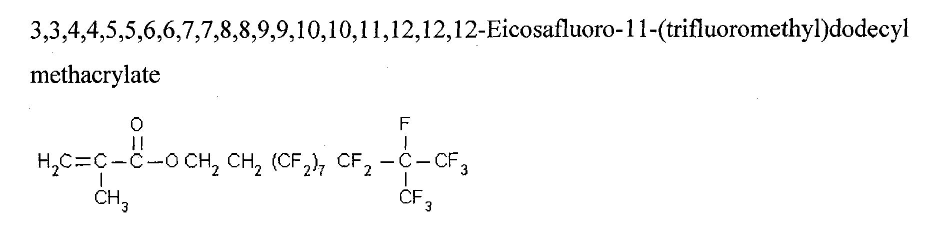

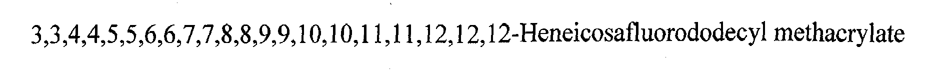

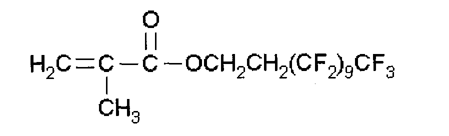

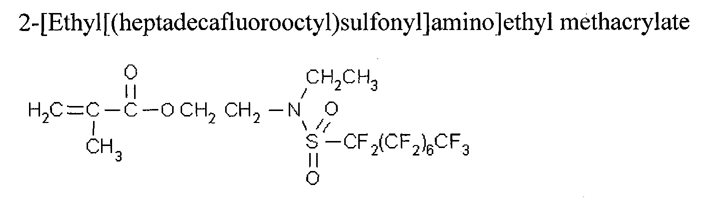

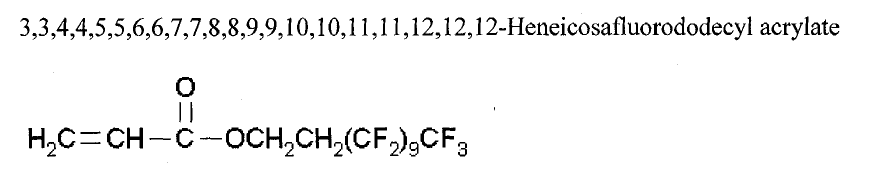

Preferred alkyl (meth)acrylates useful in the present invention are C₁-C₅ (meth)acrylates, linear or branched, optionally containing eteroatoms such as nitrogen or oxygen. Preferably, the alkyl (meth)acrylates do not contain silicon.
Increasing the size of the alkyl group, increases the flexibility of the coating but decreases its strength. In each application it is possible to find an optimal balance between these two properties.
Examples of preferred alkyl (meth)acrylates are: methylmethacrylate, methylacrylate, ethylacrylate, ethylmethacrylate, n-propylmethacrylate, n-propylacrylate, i-propylmethacrylate, i-propylacrylate, n-butylmethacrylate, n-butylacrylate, n-butylmethacrylate, n-butylacrylate, t-butylmethacrylate, t-butylacrylate, dimethylaminoethyl methacrylate, dimethylaminoethyl acrylate, acetoacetoxyethyl (meth)acrylate.

The use of a hydroxyalkyl (meth)acrylate is possible when it is desirable to improve adhesion of the coating to the substrate. The amount of hydroxy compound can vary from 0 to 20 % by weight, preferably from 0 to 15% by weight.
Examples of preferred hydroxyalkyl(meth)acrylates are: 2-hydroxyethylacrylate, 2-hydroxyethylmethacrylate, : 2-hydroxy-1-methylethylacrylate, 2-hydroxy-1-methylethylmethacrylate, 3-hydroxypropylmethacrylate, 3-hydroxypropylacrylate, 4-hydroxybutylmethacrylate, 4-hydroxybutylacrylate, 3-hydroxy-2-methylpropylmethacrylate, 3-hydroxy-2-methylpropylacrylate, 3-hydroxy-1-methylpropylmethacrylate, 3-hydroxy-1-methylpropylacrylate.

The polymer is prepared by adding to a proper solvent the different monomers and adding the initiator. Suitable solvents are ketones such as cyclohexanone, methyl amyl ketone, methyl isobutyl ketone, aromatics hydrocarbons such as toluene, xylene, alkylene carbonates such as propylene carbonate, N-methyl pyrrolidone, ethers, glycol ethers, esters, acetates and mixture of any the above.
A preferred solvent is butyl acetate.

Optionally, it is possible to use a cosolvent in an amount of between 0%-10% by weight of the total amount of monomers. Preferred co-solvents have a boiling point between 150-250°C and are selected from the list comprising: NMP, propylene carbonate, Dowanol **EPh** (Phenylglycol), **DB** (Butyldiglycol), **DM** (Methyldiglycol), **EB** (Butyl glycol), **DPnB** (Di(propylene glycol) butyl ether), **DPMA** (Di(propylene glycol) methyl ether acetate), **DPM** (Di(propylene glycol) methyl ether), DPnP (Di(propylene glycol) propyl ether), PPh (propylene glycol phenyl ether), PnB (Propylene glycol butyl ether), PGDA (Propylene glycol diacetate), PMA (Propylene glycol methyl ether acetate), PnP (Propylene glycol propyl ether), TPnB (Tri(propylene glycol) butyl ether), TPM (Tri(propylene glycol) methyl ether). These co-solvents have the purpose to improve the application. The choice of the cosolvent might be influenced by the use of cross-linking agent. In fact, if the cross-linking agent is a isocianate, it is not possible to use glycol ethers, since they are reactive towards isocianates. In this case, it is possible to use as a cosolvent a glicol ether acetate or a glicol ether diacetate (e.g. DPMA, PGDA).

Additionally it is possible to add a fluorine-containing cosolvent. This cosolvent helps dissolving the polymer at the end of the polymerization reaction and is optionally added either with the other solvents or at the end of the polymerization reaction. Preferably the solvent is added in an amount comprised between 0 and 70% by weight of the total amount of monomers.

Examples of suitable fluorine-containing solvents are: 1,3-bis(trifluoromethyl)benzene, 1,4-bis(trifluoro-methyl)benzene, Octafluorotoluene, 1,1,1,2,3,4,4,5,5,5-decafluoropentane, perfluoropentane, perfluorohexane, perfluorooctane, perfluorononane, ethylpentafluoropropionate, ethylhepta-fluorobutyrate. Preferred fluorine-containing solvents are: 1,3-bis(trifluoromethyl)benzene, 1,4-bis(trifluoromethyl)benzene, perfluorooctane, perfluorononane.

Suitable initiators are all free-radical initiator known in the art and soluble in the solvent used for dissolving the monomers. Examples of initiators are azo-bis-isobutyronitrile, 1,1'-azo-bis(cyanocyclohexane), peroxy acetates such as t-butyl peracetate, peroxides such as di-t-butyl peroxide, benzoates such as t-butyl perbenzoate, octoates such as t-butyl peroctoate.
One particularly preferred free-radical initiator is azo-bis-isobutyronitrile.

The reaction is conducted into a conventional reactor by introducing the monomers, initiators and the minimum amount of solvent(s), to reduce the effect of chain transfer by solvent. In fact, a lot of commonly used solvents act as chain transfer, reducing molecular weight of polymers. The reaction is conducted under stirring and under nitrogen flux at a temperature between 70-150 °C, preferably between 70-100 °C, for a period of time of 2-24 hours, preferably 2-8 hours.
When the reaction is completed, temperature is lowered to room temperature and solvent is added to reach a proper viscosity of the solution.

### Example 1

In a three-neck round bottom flask it was introduced 1.0 g (10 mmol) methylmethacrylate (MMA), 5.34 g 2-perfluoroalkylethylmethacrylate (10 mmol, ZONYL® , Du Pont), 3.6 g methylisobutyl-ketone (MIBK) and 0.032 g (0.20 mmol) 2,2'-azobis-isobutirronitrile (AIBN). The solution was heated to 80 °C under stirring and under nitrogen flux. After 4 h at 80 °C the viscous solution is cooled down. Part of the polymer precipitates, and is redissolved by using 3 g perfluorotoluene.

### Example 2

In a three-neck round bottom flask it was introduced 0.995 g (7 mmol) isobutylmethacrylate (IBMA), 1.60 g 2-perfluoroalkylethylmethacrylate (3 mmol, ZONYL® , Du Pont), 2.08 g methylisobutyl-ketone (MIBK) and 0.013 g (0.08 mmol) 2,2'-azobis-isobutirronitrile (AIBN). The solution was heated to 90 °C under stirring and under nitrogen flux. After 3 h at 80 °C the viscous solution is cooled down. In this case, because of the lower F content of the polymer, no precipitation was observed, thus no fluorinated solvent was added.

### Characterization of the coatings

The compositions obtained in the examples is applied at least twice by using a brush. Between two applications, the paint is left to dry for at least an hour. Then the final coating is dryed for 24 hours at room temperature, obtaining a final thickness of about 0.050 mm. The coating is transparent, clear, glossy and does not show any superficial defect. Adehsion tests were performed in a qualitative manner. It was verified the resistance to etching with hard but not sharp objects. The hardness of the coatings is in both cases sufficient for the intended use, being the coatings undamaged by a paddle with rounded edges when pressed against the coating with considerable strength.
Adhesion on glass, ceramic, polyester and metal was testes with good results on every surface, testing the resistance to detachment by using a semi-rigid tool (nylon) pressed at the interface beteween surface and coating.
A test to measure adherence to limestone was performed in the following way.
A solution of example 1 was applied twice with an interval of an hour between the two applications on a microscope glass. The coating was dryed at room temperature for 24 h. On a small area (about 1 cm²) a few drops of water from the tap were dropped. When dried, the treatment was repeated 10 times untill a considerable layer of limestone was formed. This was easily removed by using a paddle with a light pressure on the surface.

## Claims

1. Use in the preparation of a coating having hydrophobic properties and capable of reducing the formation of limestone deposits on sanitary articles of a composition comprising a polymer obtainable by polymerizing an alkyl (meth)acrylate monomer, a fluorinated alkyl (meth)acrylate monomer and optionally a hydroxyalkyl (meth)acrylate monomer in the presence of a free radical initiator wherein the polymer contains between 25 and 60 % by weight of fluorine, and a solvent.

2. Use according to claim 1 wherein the content of fluorine in the polymer is comprised between 30 and 58 % by weight.

3. Use according to claim 2 wherein the composition is combined with a solution of a cross-linking agent.

## Patentansprüche

1. Verwendung einer Zusammensetzung enthaltend ein Polymer, erhältlich durch Polymerisieren eines Alkyl(meth)acrylatmonomers, eines fluorierten Alkyl(meth)acrylatmonomers und wahlweise eines Hydroxyalkyl(meth)acrylatmonomers in Gegenwart eines Radikalinitiators, wobei das Polymer zwischen 25 und 60 Gewichts-% Fluor enthält, und ein Lösungsmittel bei der Herstellung einer Beschichtung mit hydrophoben Eigenschaften und geeignet, die Bildung von Kalksteinablagerungen auf Sanitärartikeln zu reduzieren.

2. Verwendung gemäß Anspruch 1, wobei der Fluorgehalt in dem Polymer zwischen 30 und 58 Gewichts-% beträgt.

3. Verwendung gemäß Anspruch 2, wobei die Zusammensetzung mit einer Lösung eines Vernetzungsmittels kombiniert wird.

## Revendications

1. Utilisation dans la préparation d'un revêtement ayant des propriétés hydrophobes et capable de réduire la formation de dépôts de calcaire sur des articles sanitaires d'une composition comprenant un polymère pouvant être obtenu par polymérisation d'un monomère (méth)acrylate d'alkyle, d'un monomère (méth)acrylate d'alkyle fluoré et facultativement d'un monomère (méth)acrylate d'hydroxyalkyle en présence d'un amorceur de radicaux libres, le polymère contenant entre 25 et 60% en poids de fluor, et un solvant.

2. Utilisation selon la revendication 1, dans laquelle la teneur en fluor dans le polymère est comprise entre 30 et 58% en poids.

3. Utilisation selon la revendication 2, dans laquelle la composition est combinée avec une solution d'un agent réticulant.
